# EUROPEAN PATENT SPECIFICATION

(11) **EP 2 387 133 B1**
(45) Date of publication and mention of the grant of the patent: **20.02.2013**
(21) Application number: 11165715.1
(22) Date of filing: 11.05.2011
(51) Int. Cl.: H02K 7/118

(54) **A control unit for the starting of a synchronous electric motor**
Steuergerät zum Starten eines elektrischen Synchronmotors
Unité de contrôle pour le démarrage d'un moteur électrique synchrone

(30) Priority: 13.05.2010 IT TO20100398
(43) Date of publication of application: 16.11.2011
(73) Proprietor: Aktiebolaget SKF, 415 50 Göteborg (SE)
(72) Inventor: Mola, Roberto, I-10129, Torino (IT); Scaltriti, Gianpiero, I-10135, Torino (IT); Sansone, Alessandro, I-10064, Pinerolo (Torino) (IT); Restivo, Riccardo, I-10144, Torino (IT)
(74) Representative: Fioravanti, Corrado

(56) References cited:
- DE-A1- 10 065 676
- JP-U- 60 062 859

## Description

The present invention relates to a control unit for the starting of a synchronous electric motor.

In general, when a synchronous electric motor is started, the rotor does not have a definite or preset direction of rotation, since it is free to rotate in either a clockwise or a counterclockwise direction, depending on random starting conditions. With certain applications of electric motors described above, such as, for example, hydraulic pumps, the possibility of free rotation of the rotor makes it impossible to use blades having a shaped profile. Only simple radial fins having a flat profile can be used. Consequently, efficiency of the hydraulic section of the pump is limited.

Therefore, electronic or mechanical devices have been developed in order to control the rotation of the rotor and prevent it from rotating in one of the two directions of rotation upon starting an asynchronous electric motor. If, on the one hand, known electronic devices have proven to be rather expensive regardless of the number of switching cycles, known mechanical devices, although being less expensive than the electronic ones, have not yet been able to pass all of the reliability tests over a large number of switching cycles.

DE 100 65 676 A1 discloses a control unit for the starting of a synchronous electric motor as defined in the preamble of claim 1.

It is an object of the present invention to provide a control unit for the starting of a synchronous electric motor, which is not only cost-effective to manufacture, but also particularly reliable over a large number of switching cycles.

According to the present invention there is provided a control unit for the starting of a synchronous electric motor as defined in claim 1.

An exemplary embodiment of the invention will now be described with reference to the attached drawings, in which:
- Figure 1 is a front elevational view of a preferred embodiment of a control unit for the starting of a synchronous electric motor;
- Figure 2 is a cross-section taken along the line II-II of Figure 1; and
- Figure 3 is a view to an enlarged scale, with some parts sectioned and some other parts cutaway for clarity, of a detail of Figure 1.

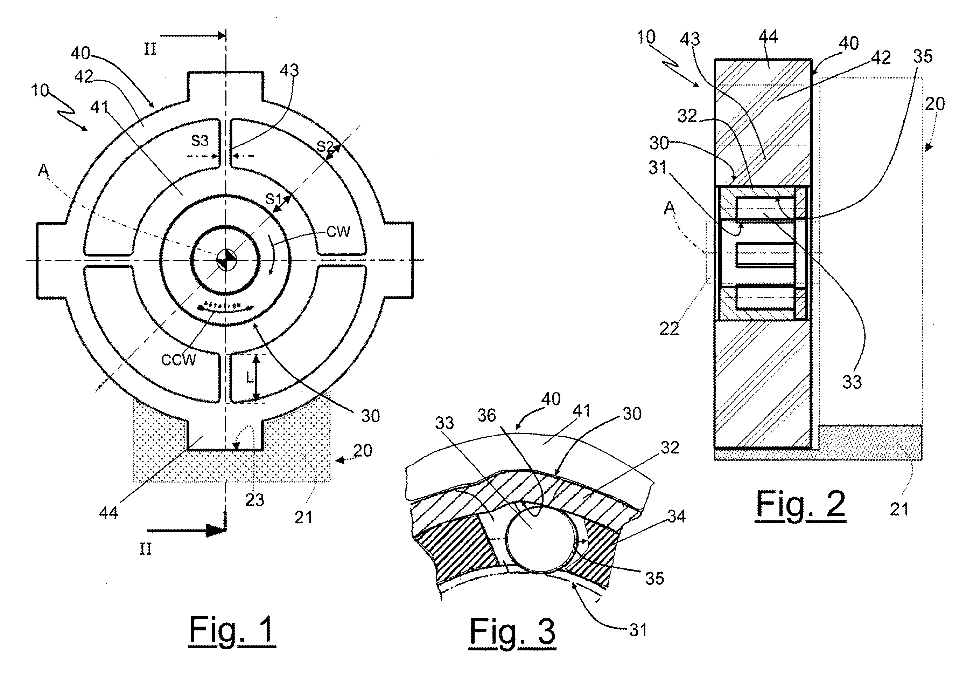

With reference to figures 1 and 2, designated overall at 10 is a control unit for controlling the starting of a synchronous electric motor, schematically illustrated in Figure 1 and designated 20.

The motor 20 includes a stationary support 21 for supporting the stator pole shoes, and a rotor shaft 22 adapted for rotating about a rotation axis A with respect to the stationary support 21 due to a rotating magnetic field generated by the stator pole shoes. Upon activation of the motor 20, the electromagnetic torque CEM generated by the stator field is not applied according to any predetermined direction of rotation about the axis A and, therefore, the shaft 22 could start rotating around the axis A either in a counterclockwise direction of rotation CCW or a clockwise direction of rotation CW.

The control unit 10 is adapted for allowing rotation of the shaft 22 around the axis A in a single direction of rotation which, for convenience of explanation and without any limitation to the following discussion, is assumed to be the counterclockwise direction of rotation CCW.

The unit 10 includes a non-return device or backstop device 30, which provides a seat 31 for accommodating the rotor shaft 22 and is adapted for locking the rotation of shaft 22 in the clockwise direction CW. In addition, when the motor 20 is started, and in case the starting should cause the shaft 22 to rotate in a clockwise direction CW, the device 30, after locking the rotation of the shaft 22, is also adapted for applying a rebound torque CR in the counterclockwise direction of rotation CCW to the shaft 22 by virtue of the recoil which the shaft 22 is subjected to following its locking.

The intensity of the rebound torque CR is not likely to overcome the intensity of the electromagnetic torque CEM which the shaft 22 continues to be subjected to. The unbalance or difference between the CEM electromagnetic torque applied to the shaft 22 and the rebound torque CR, being in favour of the CEM torque, determines a stall condition for the shaft 22, with a consequent locking of the motor 20. Therefore, in order to avoid such a stall condition, the unit 10 comprises an amplifier device 40 for amplifying the rebound torque CR.

The amplifier device 40 is a mechanical type of device applied to the non-return device 30 and adapted to boost the torque CR so as to cause the shaft 22 to rotate in the correct direction of rotation allowed by the device 30.

The amplifier device or boost device 40 is interposed between the support 21 and the non-return device 30. The amplifier device is adapted to increase the rebound torque CR to a value at least exceeding a value of the CEM magnetic torque of rotation of the rotor shaft 22 at least while the motor 20 is in its starting conditions.

According to what is illustrated in Figure 3, the non-return device 30 is defined by a freewheel clutch of substantially known design of which there will be described only those parts which are relevant for understanding its operation in combination with the amplifier device 40. The non-return device 30 described herein represents, however, only one of a number of possible alternatives of freewheel clutches, which the following discussion will refer explicitly. It is to be understood that the invention is not limited in its application to this exemplary non-return device.

The device 30 includes an annular case 32, a cage 34 located within the case 32 and provided with a plurality of seats 35 evenly distributed around the axis of rotation A, and, for each seat 35, a roller 33. Each roller 33 protrudes radially out of its seat 35 towards the axis A so as to define, together with the other rollers 33, the seat 31 for accommodating the rotor shaft 22.

The cage 34 is fixed with respect to the case 32 and keeps the rollers 33 substantially equally spaced from one another around the axis A. For each seat 35, the case 32 forms a respective asymmetric bend or recess 36 for allowing rotation of the relevant roller 33 both in a steady running state and also when the shaft 22 rotates in the counterclockwise direction of rotation CCW upon starting the motor 20.

The device 40 includes an internal annular body 41 coaxial to the axis A and angularly integral with the case 32, and an outer annular body 42, which is coaxial to the body 41 and is angularly integral with the support 21 of the motor 20.

The body 41 and the body 42 are cylindrical and have equal axial width and respective radial thicknesses S1 and S2, of which the thickness S1 is substantially greater than the thickness S2.

The body 41 and body 42 are made of plastic material, preferably, but not necessarily, polypropylene or other mouldable plastic materials such as, for example, PA6 polyamide, or PA66 polyamide, both with the addition of ethylene propylene diene monomer, so as to allow moulding the device 40 over the device 30. Anyway, the selected plastic material shall exhibit good elastic properties and fatigue strength.

The bodies 41 and 42 are also part of the device 40 and are kept radially spaced from one another by a given number of radial fins 43, which are made as a single piece with and of the same material of the bodies 41 and 42.

In the illustrated exemplary embodiment, the fins 43 are four in number, but can also be three or more than four, depending on constructional and operational requirements. In any case, the fins 43 are evenly distributed around the axis A and are arranged at right angles to the tangents of the outer and inner surfaces of the bodies 41 and 42.

The fins 43 have an axial width which is equal to the axial width of the bodies 41 and 42, and have a thickness S3 lesser than the thickness S1 and S2. In addition, the fins 43 have a radial length L which is greater than their axial width, and also greater than the thicknesses S1 and S2. Therefore, the fins 43 are deformable in length, rather than in the other dimensions, by an amount ΔL.

The device 40 includes, finally, four or more radial projections 44, which are obtained along the periphery of the body 42, and are housed in respective seats 23 made in the stationary support 21 in order to prevent any rotation of the body 42 with respect to the same stationary support 21 and to the axis A. The radial projections 44 are preferably located close to or radially aligned with the fins 43 and have a radial height that prevents them from slipping out of their seats 23 while being radially free with respect to the same seats 23 since some radial play exists between the radial projections 44 and their seats 23.

In use, upon starting the motor 20, the electromagnetic torque CEM generated by the stator field rotates the shaft 22 about the axis A. In case such rotation is allowed by the non-return device 30, i.e. in the Counterclockwise direction of rotation CCW as assumed in this example, the shaft 22 will rotate freely, supported on the rollers 33. Due to the counterclockwise direction of rotation CCW, the rollers 33 will get into the recesses 36.

If, on the contrary, the electromagnetic torque CEM generated by the stator field should tend to rotate the shaft 22 about the axis A in a clockwise direction of rotation CW, i.e. in the direction of rotation prevented by the non-return device 30, the shaft 22 will cause the rollers 33 to roll out of the recesses 36 and be radially compressed between the shaft 22 and the case 32, thereby locking the rotation of the shaft 22.

As a result of this locking, the shaft 22 and the case 32 become angularly integral with one another, causing also the body 41 to rotate about the axis A. Since the body 41 is connected to the fins 43, and since the body 42 remains stationary with the support 21, rotation of the body 41 causes a gradual lengthening of the elastic fins 43, leading to a consequent accumulation of elastic energy by the device 40.

The locking of the rotation of shaft 22 and the elongation of the fins 43 occur all of a sudden. As a result, the shaft 22 undergoes, in a direction opposite to the initial rotation, a backlash that turns into a rebound torque CR. The intensity of the rebound torque is amplified by the elastic torque CT which the device 40 applies to the shaft 22, thereby returning the elastic energy accumulated during the elongation of the fins 43.

The addition of the intensities of the rebound torque CR and the elastic torque CT allows to overcome the electromagnetic torque CEM in the clockwise direction CW, which the shaft is still subjected to, and causes the shaft 22 to start rotating in a direction of rotation opposite to the initial one, i.e. in a counterclockwise direction of rotation CCW. Owing to the known working features of the synchronous motor 20, this direction of rotation will then be kept for the rest of the operating cycle.

The control unit 10 for the starting of a synchronous electric motor as described above, besides being reliable for a large number of starting cycles of the motor 20, it is also very easy and cheap to implement. Particularly, the device 40 may be made by molding and subsequently assembled with the device 30 by inserting axially and forcedly the case 32 into the body 41. As an alternative, the amplifier device 40 may be manufactured by over-moulding it on the non-return device 30.

The above described unit 10 allows the use of synchronous motors for all those applications, such as, for example, hydraulic pumps, where it is particularly useful and advantageous to have a certain initial rotation of the rotor shaft.

It is understood that the invention is not limited to the embodiment here described and illustrated, which is considered as an exemplary implementation of the control unit 10 for controlling the starting of a synchronous electric motor; rather, the invention may undergo further modifications of the shapes and arrangements of parts, constructional and assembly details, without departing from the scope of the invention, which is defined in the appended claims.

## Claims

1. A control unit (10) for the starting of a synchronous electric motor (20), the control unit (10) comprising:
- a non-return device (30) which provides a seat (31) for accommodating a rotor shaft (22) of the electric motor (20) and which is adapted to prevent rotation of the rotor shaft (22) in a first direction of rotation by exerting a rebound torque (CR) on the rotor shaft, at the time of starting of the electric motor (20), in a second direction of rotation; and
- amplifier means (40) for amplifying the rebound torque (CR), these means being interposed between a fixed support (21) of the electric motor (20) and the non-return device (30) in order to amplify the rebound torque (CR) to a value which is at least greater than a value of a magnetic rotation torque (CEM) of the rotor shaft (22) in the first direction of rotation, the amplifier means (40) comprising a first annular body (41) angularly fixed to the housing seat (31), a second annular body (42) angularly fixed to the fixed support (21), and at least two bodies (43) which are interposed between the first body (41) and the second body (42) and which are elastically deformable in length, **characterized in that** the bodies (43) interposed between the first (41) and second (42) body are radial fins (43).

2. A control unit according to claim 1, **characterized in that** the first body (41), the second body (42) and the radial fins (43) are made in one piece with each other and are made from the same plastic material.

3. A control unit according to claim 2, **characterized in that** the axial width of each radial fin (43) is equal to an axial width of the first body (41) and of the second body (42).

4. A control unit according to claim 3, **characterized in that** the thickness (S3) of each radial fin (43) is equal to or less than a radial thickness (S1) (S2) of the first body (41) and/or of the second body (42).

5. A control unit according to claim 4, **characterized in that** the radial length (L) of each radial fin (43) is greater than both its own axial width and the radial thickness greater (S1) (S2) of the first body (41) and of the second body (42).

6. A control unit according to claim 5, **characterized in that** the second body (42) comprises a plurality of radial projections (44) housed in corresponding seats (23) formed in the fixed support (21) in order to prevent rotation of the second body (42) with respect to the fixed support (21) and with respect to an axis (A) of rotation of the rotor shaft (22), wherein some radial play exists between the radial projections (44) and their seats (23).

7. A control unit according to claim 6, **characterized in that** the non-return device (30) is formed by a freewheel clutch and comprises a case (32) and a plurality of needle rollers (33) positioned in the case (32) and about the axis (A) of rotation to form said housing seat (31), the case (32) having, for each needle roller (33), a corresponding recess (36) to permit rotation of the corresponding needle roller (33) when the rotor shaft (22) rotates in the second direction of rotation.

8. A control unit according to claim 7, **characterized in that** the case (32) is positioned inside said first body (41) and is angularly fixed for rotation to the first body (41).

9. A control unit according to claim 8, **characterized in that** the amplifier means (40) are overmoulded onto the non-return device (30).

## Patentansprüche

1. Steuergerät (10) zum Starten eines elektrischen Synchronmotors (20), wobei das Steuergerät (10) Folgendes aufweist:
- eine Rückschlagvorrichtung (30), die einen Sitz (31) zur Aufnahme einer Rotorwelle (22) des elektrischen Motors (20) vorsieht und dazu ausgebildet ist, eine Drehung der Rotorwelle (22) in eine erste Drehrichtung durch Ausüben eines Rückschlagmoments (CR) auf die Rotorwelle zum Zeitpunkt des Startens des elektrischen Motors (20) in eine zweite Drehrichtung zu verhindern; und
- Verstärkungsmittel (40) zum Verstärken des Rückschlagmoments (CR), wobei diese Mittel zwischen einem feststehenden Träger (21) des elektrischen Motors (20) und der Rückschlagvorrichtung (30) eingesetzt sind, um das Rückschlagmoment (CR) auf einen Wert zu verstärken, der zumindest größer als ein Wert eines magnetischen Drehmoments (CEM) der Rotorwelle (22) in der ersten Drehrichtung ist, wobei die Verstärkungsmittel (40) einen ersten ringförmigen Körper (41) aufweisen, der winkelig an dem Gehäusesitz (31) befestigt ist, einen zweiten ringförmigen Körper (42), der winkelig an dem feststehenden Träger (21) befestigt ist, und mindestens zwei Körper (43), die zwischen dem ersten Körper (41) und dem zweiten Körper (42) eingesetzt sind und in der Länge elastisch verformbar sind, **dadurch gekennzeichnet, dass** die Körper (43), die zwischen dem ersten (41) und zweiten (42) Körper eingesetzt sind, radiale Lamellen (43) sind.

2. Steuergerät nach Anspruch 1, **dadurch gekennzeichnet, dass** der erste Körper (41), der zweite Körper (42) und die radialen Lamellen (43) einstückig miteinander gebildet sind und aus demselben Kunststoffmaterial hergestellt sind.

3. Steuergerät nach Anspruch 2, **dadurch gekennzeichnet, dass** die axiale Breite jeder radialen Lamelle (43) gleich einer axialen Breite des ersten Körpers (41) und des zweiten Körpers (42) ist.

4. Steuergerät nach Anspruch 3, **dadurch gekennzeichnet, dass** die Dicke (S3) jeder radialen Lamelle (43) gleich oder kleiner einer radialen Dicke (S1), (S2) des ersten Körpers (41) und/oder des zweiten Körpers (42) ist.

5. Steuergerät nach Anspruch 4, **dadurch gekennzeichnet, dass** die radiale Länge (L) jeder radialen Lamelle (43) größer als sowohl ihre eigene axiale Breite als auch die radiale Dicke (S1), (S2) des ersten Körpers (41) und des zweiten Körpers (42) ist.

6. Steuergerät nach Anspruch 5, **dadurch gekennzeichnet, dass** der zweite Körper (42) mehrere radiale Vorsprünge (44) aufweist, die in entsprechenden Sitzen (23) aufgenommen sind, die in dem feststehenden Träger (21) ausgebildet sind, um eine Drehung des zweiten Körpers (42) in Bezug auf den feststehenden Träger (21) und in Bezug auf eine Drehachse (A) der Rotorwelle (22) zu verhindern, wobei ein gewisses radiales Spiel zwischen den radialen Vorsprüngen (44) und ihren Sitzen (23) vorhanden ist.

7. Steuergerät nach Anspruch 6, **dadurch gekennzeichnet, dass** die Rückschlagvorrichtung (30) durch eine Freilaufkupplung gebildet ist und ein Gehäuse (32) und mehrere Nadelwalzen (33) aufweist, die in dem Gehäuse (32) und um die Drehachse (A) positioniert sind, um den Gehäusesitz (31) zu bilden, wobei das Gehäuse (32) für jede Nadelwalze (33) eine entsprechende Ausnehmung (36) hat, um eine Drehung der entsprechenden Nadelwalze (33) zu ermöglichen, wenn die Rotorwelle (22) in die zweite Drehrichtung dreht.

8. Steuergerät nach Anspruch 7, **dadurch gekennzeichnet, dass** das Gehäuse (32) im Inneren des ersten Körpers (41) positioniert ist und winkelig zur Drehung am ersten Körper (41) befestigt ist.

9. Steuergerät nach Anspruch 8, **dadurch gekennzeichnet, dass** die Verstärkungsmittel (40) auf die Rückschlagvorrichtung (30) umspritzt sind.

## Revendications

1. Unité de commande (10) pour le démarrage d'un moteur électrique synchrone (20), l'unité de commande (10) comprenant :
- un dispositif de non-retour (30) qui fournit un logement (31) pour recevoir un arbre de rotor (22) du moteur électrique (20) et qui est conçu pour empêcher la rotation de l'arbre de rotor (22) dans un premier sens de rotation en exerçant un couple de rebond (CR) sur l'arbre de rotor, au moment du démarrage du moteur électrique (20), dans un deuxième sens de rotation ; et
- des moyens d'amplification (40) pour amplifier le couple de rebond (CR), ces moyens étant interposés entre un support fixe (21) du moteur électrique (20) et le dispositif de non-retour (30) afin d'amplifier le couple de rebond (CR) jusqu'à une valeur qui est au moins supérieure à une valeur d'un couple de rotation magnétique (CEM) de l'arbre de rotor (22) dans le premier sens de rotation, les moyens d'amplification (40) comprenant un premier corps annulaire (41) fixé angulairement au logement de réception (31), un deuxième corps annulaire (42) fixé angulairement au support fixe (21) et au moins deux corps (43) qui sont interposés entre le premier corps (41) et le deuxième corps (42) et qui peuvent être déformés élastiquement en longueur, **caractérisée en ce que** les corps (43) interposés entre le premier (41) et le deuxième (42) corps sont des nervures radiales (43).

2. Unité de commande selon la revendication 1, **caractérisée en ce que** le premier corps (41), le deuxième corps (42) et les nervures radiales (43) sont réalisés d'un seul tenant les uns avec les autres et sont constitués du même matériau plastique.

3. Unité de commande selon la revendication 2, **caractérisée en ce que** la largeur axiale de chaque nervure radiale (43) est égale à une largeur axiale du premier corps (41) et du deuxième corps (42).

4. Unité de commande selon la revendication 3, **caractérisée en ce que** l'épaisseur (S3) de chaque nervure radiale (43) est inférieure ou égale à une épaisseur radiale (S1) (S2) du premier corps (41) et/ou du deuxième corps (42).

5. Unité de commande selon la revendication 4, **caractérisée en ce que** la longueur radiale (L) de chaque nervure radiale (43) est supérieure à la fois à sa propre largeur axiale et à l'épaisseur radiale (S1) (S2) du premier corps (41) et du deuxième corps (42).

6. Unité de commande selon la revendication 5, **caractérisée en ce que** le deuxième corps (42) comprend une pluralité de saillies radiales (44) logées dans des logements correspondants (23) formés dans le support fixe (21) afin d'empêcher la rotation du deuxième corps (42) par rapport au support fixe (21) et par rapport à un axe (A) de rotation de l'arbre de rotor (22), un jeu radial étant présent entre les saillies radiales (44) et leurs logements (23).

7. Unité de commande selon la revendication 6, **caractérisée en ce que** le dispositif de non-retour (30) est formé par un embrayage à roue libre et comprend un boîtier (32) et une pluralité d'aiguilles (33) positionnées dans le boîtier (32) et autour de l'axe (A) de rotation pour former ledit logement de réception (31), le boîtier (32) ayant, pour chaque aiguille (33), un évidement correspondant (36) pour permettre la rotation de l'aiguille correspondante (33) lorsque l'arbre de rotor (22) tourne dans le deuxième sens de rotation.

8. Unité de commande selon la revendication 7, **caractérisée en ce que** le boîtier (32) est positionné à l'intérieur dudit premier corps (41) et est fixé angulairement en rotation au premier corps (41).

9. Unité de commande selon la revendication 8, **caractérisée en ce que** les moyens d'amplification (40) sont surmoulés sur le dispositif de non-retour (30).
